# EUROPEAN PATENT SPECIFICATION

(11) **EP 1 094 682 B1**
(45) Date of publication and mention of the grant of the patent: **08.06.2005**
(21) Application number: 99850156.3
(22) Date of filing: 22.10.1999
(51) Int. Cl.: H04Q 7/38, H04L 29/06

(54) **Mobile phone incorporating security firmware**
Mobiltelefon mit eingebauter Sicherheitsfirmware
Téléphone sans fil qui incorpore du firmware de sécurité

(43) Date of publication of application: 25.04.2001
(73) Proprietor: Telefonaktiebolaget LM Ericsson (publ), 164 83 Stockholm (SE)
(72) Inventor: Barriga, Luis, 128 32 Skarpnäck (SE); Blom, Rolf, 175 68 Järfälla (SE)
(74) Representative: Norin, Klas

(56) References cited:
- EP-A- 0 790 749
- WO-A-98/32301
- US-A- 5 778 071
- INOUE A ET AL: "IP LAYER SECURITY AND MOBILITY SUPPORT DESIGN POLICY AND AN IMPLEMENTATION" ISS. WORLD TELECOMMUNICATIONS CONGRESS. (INTERNATIONAL SWITCHING SYMPOSIUM),CA,TORONTO, PINNACLE GROUP, 1997, pages 571-577, XP000720565
- DATABASE INTERNET [Online] 30 April 1998 (1998-04-30) "Wireless Application Protocol: Architecture Specification" retrieved from HTTP://WWW1.WAPFORUM.ORG/TECH/TERMS.ASP?DO C=SPEC-W XP002140982
- HAARTSEN J: "BLUETOOTH - THE UNIVERSAL RADIO INTERFACE FOR AD HOC, WIRELESS CONNECTIVITY" ERICSSON REVIEW,SE,ERICSSON. STOCKHOLM, no. 3, 1 January 1998 (1998-01-01), pages 110-117, XP000783249 ISSN: 0014-0171
- SCHULZRINNE H ET AL: "INTERNET TELEPHONY: ARCHITECTURE AND PROTOCOLS - AN IETF PERSPECTIVE" COMPUTER NETWORKS AND ISDN SYSTEMS,NL,NORTH HOLLAND PUBLISHING. AMSTERDAM, vol. 31, no. 3, 11 February 1999 (1999-02-11), pages 237-255, XP000700321 ISSN: 0169-7552

## Description

### FIELD OF INVENTION

The present invention relates to a method and arrangement for data protection (security) via encryption/decryption for network communication.

### DESCRIPTION OF RELATED ART

Traditionally, the Internet has no provision for security and, if measures are not taken, communicating parties can be the target of passive and active attacks such as eavesdropping, spoofing, hijacking, replay and denial of service, etc. Similarly, computers directly connected to the Internet may be the targets of attacks that exploit security flaws in the operating system or Internet services to inject data viruses or so called Trojan horses. For security, data is often protected before being sent on the network. The computer themselves are carefully scrutinized to close any possible holes in order to avoid intrusion.

The Internet Protocol (IP) formally specifies the format of Internet packets, called datagrams, and informally embodies the ideas of connectionless delivery. Analogous to a physical frame, the IP datagram is divided into header and data areas. Among other information, the datagram header contains the source and destination IP addresses, fragmentation control, precedence, and a checksum used to catch transmission errors. Besides fixed-length fields, each datagram header can contain at least one option field. The option field is of variable length, depending on the number and type of options used as well as the size of the data area allocated for each option.

The idea of layering is fundamental in protocol design because it provides a conceptual framework for protocol design. In a layered model, each layer handles one part of the communication problem and usually corresponds to one protocol. Protocols follow the layering principle, which states that the software implementing layer "n" on the destination machine receives exactly what the software implementing layer "n" on the source machine sends. In practice, protocol software uses multiplexing and demultiplexing to distinguish among multiple protocols within a given layer, making protocol software more complex than the layering model suggests.

Encrypting/decrypting data has been performed by complex security software within applications or, to simplify the applications, encrypting/decrypting has been performed within the protocol stack of network protocols.

Internet Protocol (IP) provides one of the two major protocols used in internetworking. A user considers the Internet as a single virtual network that interconnects all hosts, and through which communication is possible; its underlying architecture is both hidden and irrelevant. Conceptually, an IP internet provides three set of services in three dependent layers. The three layers will be disclosed in more details below.

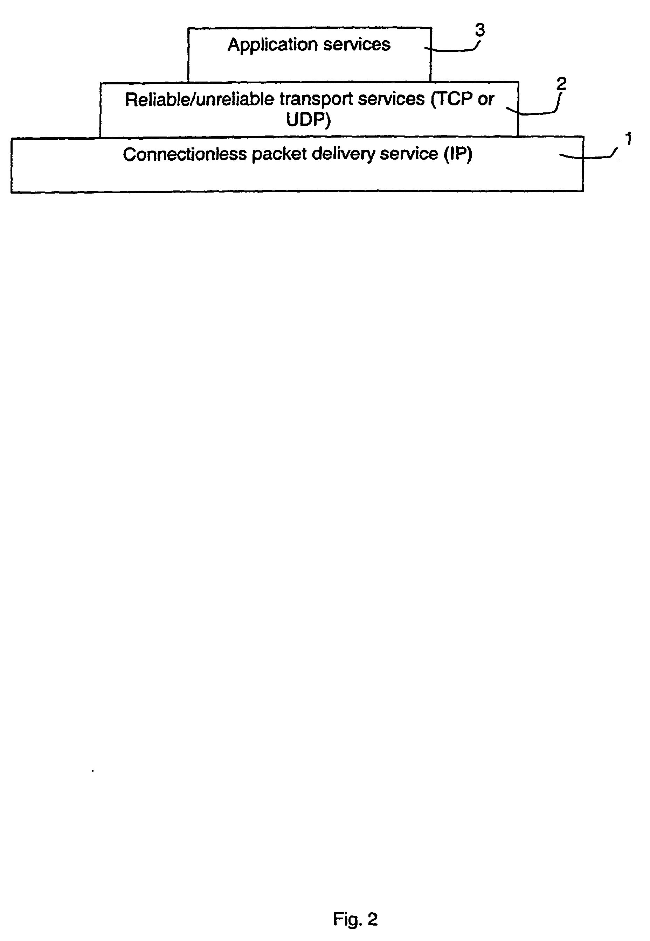

In figure 2 is depicted the three layers of a IP stack internet according to prior art; their arrangement in figure 2 suggests dependencies among them. At the lowest level 1, a connectionless delivery service provides a foundation on which everything rests. At the next level 2, a transport service provides a higher platform on which applications depend. I.e., internet software is designed around three conceptual networking services arranged in a hierarchy.

Enterprises build Intranets surrounded by firewalls that are filtering incoming traffic in order to protect internal corporate networks from Internet attacks. To this end, firewall computers, which have direct access to a network, may be used to prevent unauthorized access to internal/private networks. In addition, for mobile users, in order to protect communication between a remote host and the corporate Intranet across the Internet, encrypted channels are used, i.e. a secure tunnel through the Internet. The security is achieved by scrambling the data by using cryptography - secret writing - and is called Virtual Private Networking (VPN). The Internet Engineering Task Force (IETF) is standardizing the IPsec protocol suite that can be used for this. The suite defines how to authenticate peers and negotiate encryption keys in order to establish secure network channels between parties.

The IPsec protocol is a set of security extensions providing privacy and authentication services by using modern cryptographic methods. It can protect all traffic against unauthorized modification and eavesdropping and securely authenticate the parties communicating with each other. However, traffic travelling outside the secured boundaries of networks protected by VPN need separate protection.

In a system using IPsec, in order to protect the contents of an IP datagram, the data is transformed using cryptography. There are two main transformation types that form the building blocks of IPsec, the Authentication Header (AH) transformation, and the Encapsulating Security Payload (ESP) transformation.

The Authentication Header (AH) provides authentication (data origin authentication, connectionless integrity, and anti-replay protection services) to a datagram. It protects all the data in the datagram from tampering as specified in the Security Association, including the fields in the header that do not change in transit. AH has been designed to just provide integrity. A deficiency with AH is that it does not provide confidentiality.

The ESP header provides confidentiality, data origin authentication, connectionless integrity, anti-replay protection, and limited traffic flow confidentiality. It does this by encrypting the contents of the datagram as specified by the Security Association. The ESP transformations encrypt and decrypt portions of datagrams, optionally wrapping or unwrapping the datagram within another IP datagram. Optionally ESP transformations may perform data integrity validation and compute an Integrity Check Value (ICV) for the datagram being sent.

Before a secure session can begin, the communicating parties need to negotiate the terms for the communication. These terms are the ones that are defined in the Security Association (SA). There needs to be an automated protocol to establish the SA to make the process feasible in a global network like the Internet. This automated protocol is the Internet Key Exchange (IKE). IKE is meant for establishing, negotiating, modifying, and deleting SA:s. It securely produces random short-term session keys for the hosts and authenticates the hosts using shared secrets (passwords), or cryptographicaly using certificates.

The IKE key negotiation and exchange works in two phases. During the first phase, IKE establishes a secure channel for further negotiation traffic and defines the security association to be used during the negotiations. During the second phase, it negotiates a security association to be used by IPsec. Although the first phase is time consuming, in the end, time is saved as the more frequent second phase negotiations can be performed faster after the first phase negotiations have been performed.

The remote host also needs the security software to handle this connection. The patent "Data Encryption/Decryption for Network Communication", WO-9726731 A1, proposes a method wherein the remote host system software is modified. A security network driver software, such as IPsec, is inserted between the network protocol IP and the corresponding network driver. Security measures are performed upon the network packets before the network packets are passed to the network protocol IP from the application programming interface. A security network driver is used along with two encryption/decryption libraries for added data security. A network driver and additional hardware are also used in communication with the networks. Thus, all IP traffic is transparently encrypted/decrypted (tunneled). This set-up can be used by mobile subscribers using the mobile telephone as a modem to connect to an Intranet through the Internet. To this end, the IPsec protocol suite needs to be installed as the security network driver in the remote host.

A deficiency with the method described in WO-9726731 A1 is that the remote host, i.e. the host of the mobile user, has to be adapted to handle IPsec tunnels. Considering the large amount of already deployed hosts (laptops, workstations, PCs) and the diversity of operating systems and their versions, this is an unfeasible solution. Furthermore, upgrades can affect the installed security gateway.

Another deficiency with the method described in WO-9726731 A1 is that only a specialized crew, not the common user, can perform the installation and configuration of such low-level security network modules.

A further deficiency with the method described in WO-9726731 A1 is that IPsec is being slowly adopted and it will take a long time until the computer industry will include IPsec as a standard component in a commercial operating system for potential remote hosts. Nevertheless, on the Intranet market, several companies are offering IPsec as a component in firewall computers or as a standalone IPsec security gateway. In more details, several companies have already introduced one side of IPsec, namely the side protecting the site of the company. The other side, i.e. the remote host, is difficult to provide with IPsec.

Another deficiency with the method described in WO-9726731 A1 is that users inadvertently may download malicious software when accessing the Internet. Data viruses can remove, disable or modify the security software of the remote host, without the knowledge of the user. A data virus may also harm or even destroy the operating system of a host.

A mechanism for supporting security and mobility features by IP-layer packet handling is discussed in the document "IP Layer Security and Mobility Support Design Policy and an Implementation" (ISS World Telecommunications congress (International Switching Symposium), CA, Toronto, Pinnacle Group, 1997, pages 571 - 577, XP000720565). A basic design policy, according to this document, is that a secure mobile node comprises an IPsec entity by itself.

A well known method for a remote host to access a network server is to use the WAP protocol ("Wireless Application Protocol:
Architecture Specification"; retrieved from
HTTP://WWW1.WAPFORUM.ORG/TECH/TERMS.ASP?DOC=SPEC-W,
XP002140982). According to this document a remote host is should preferably support the IPsec protocol.

A remote host, e.g. a personal computer, can use a modem for communication over a network. The connection between the host computer and a modem can further use a short-range communication system, e.g. based on Bluetooth ("BLUETOOTH―The universal radio interface for ad hoc, wireless connectivity", Jaap Haartsen, Ericsson Review No. 3, 1998, pages 110 - 117, XP000783249).

Another type of short-range communication is based on infrared light. Document EP-A-0 790 749 describes use of infrared interfaces to facilitate data communication between cellular telephone and portable computer simultaneously with voice communication between the telephone and a telephone system.

Internet telephony is discussed in the document "Internet Telephony: Architecture and Protocols - an IETF Perspective" (Schulzrinne H et al, Computer Networks and ISDN Systems, NL, North Holland Publishing, Amsterdam, vol. 31, no. 3, 11 February 1999, pages 237 - 255, XP000700321). Security is briefly discussed, in particular related to signaling and transport protocols.

The document WO 98 32301 A discloses a method whereby a remote host can connect to a private network. According to the method the remote host receives, once being authenticated, a temporary IP address associated with the private network.

The US patent 5,778,01 discloses a portable security device that can be connected to a telephone and used to uniquely identify the user to a network.

### SUMMARY OF THE INVENTION

Today, when a user, who stays away from the premises of his Intranet, wants to communicate with said Intranet, has to use a security system using a security network driver software in order to protect the transmission of data between the Intranet and the remote host, i.e. the computer used by said user to communicate with his Intranet.

The main problem with security systems using a security network driver software is that the remote host, i.e. the computer used by the mobile user, has to be adapted to handle IPsec tunnels. With the large amount of already deployed hosts (laptops, workstations, PCs) and a diversity of operating systems and their versions, this is an unfeasible solution. Furthermore, upgrades are also difficult to maintain and perform for such scenario.

Another problem with security systems using a security network driver software is that installation and configuration of such low-level security network modules (i.e. operating system dependent) may only be performed by experienced personnel and not by the common user.

A further problem with security systems using a security network driver software is that users may, inadvertently, download malicious software when accessing the Internet. Data viruses may remove, disable or modify the security software of the remote host without the knowledge of the user.

A yet further problem with security systems using encrypting and encapsulating is that the process including encapsulating/decapsulating and encrypting /decrypting of network packets may require a large portion of the processing power of a computer.

The arrangement disclosed herein comprises an independent access unit provided with firmware. Firmware is a software stored in some sort of read-only memory module in order to provide better security. Firmware cannot be modified by external data viruses.

In accordance with the disclosed method and arrangement, for purpose of client authentication, private keys for digital certificates, or in general, any private or secret information that is necessary for client authentication can be stored in a personal SIM-card/smartcard and used in combination with the mobile telephone as a security gateway upon establishment of a IPsec tunnel. An employee staying away from his ordinary office may, by means of a personal independent access unit functioning as a security gateway, communicate with the protected Intranet of his employer. Such a scenario enables the employee to borrow any remote host in order to access the Intranet by means of a mobile communication network or a fix network, e.g. GSM, CDMA, PSTN.

The solution is to move the security function to the mobile telephone or the independent access unit, preferably a wireless independent access unit, where a lightweight security gateway is implemented.

In this solution, in contrast to prior art wherein the security layer is located inside the remote host, the security management is provided in the mobile telephone. The IPsec firmware and key management are located inside the mobile telephone, where it cannot be affected by potential attacks.

According to one advantageous embodiment, the security gateway functionality can moreover be provided in an external hardware module that can be plugged into the mobile phone, enabling commercially available telephones to work as security gateways.

According to a further advantageous embodiment of the invention a computer program product is provided, which is loadable into the internal memory of an independent access unit and comprises software portions for performing the method disclosed herein, when said independent access unit is activated by a computer.

A purpose of the inventive method and arrangement is to provide better security for electronic devices communicating over the Internet, wherein the communication is provided by means of the a mobile communication network or a fix network.

Another purpose of the inventive method and arrangement is to provide security for externally located electronic devices communicating over the Internet to an Intranet.

A further purpose of the invention is to provide a security gateway being able to resist external attacks. Said purpose is accomplished by means of a security device in the form of a hardware inside the mobile telephone.

Another purpose of the disclosed method and arrangement is that all security associations, such as keys and configuration parameters, and communications are handled in a personal single point - the independent access unit.

A yet further purpose of the disclosed method and arrangement is that the usage of an independent access unit, preferably a wireless independent access unit, as a security gateway enables its owner to use an arbitrary remote host, such as a laptop or standalone computer, in order to access his/her Intranet.

An advantage of the disclosed herein method and arrangement is that low-level security software does not have to be installed on the remote host.

Another advantage of the disclosed method and arrangement is that all security associations, such as keys and configuration parameters, and communications are handled in a personal single point - the independent access unit, preferably a wireless independent access unit.

A further advantage of the disclosed herein method and arrangement is that IPsec firmware provides better protection inside the independent access unit than the security that may be provided in the remote host, where it is likely to be attacked when the remote host is used to access the Intranet.

A yet further advantage with the herein disclosed method and arrangement is that a firmware cannot be modified by external data viruses.

Another advantage with the disclosed method and arrangement is that the usage of an independent access unit, preferably a wireless independent access unit, as a security gateway enables its owner to use an arbitrary remote host in order to access his Intranet.

In this disclosure, the term mobile telephone is used. A man skilled in the art understands that the method disclosed herein also apply for any wireless telephone. Furthermore, instead of a wireless telephone, any independent access unit, preferably a wireless independent access unit, may be used, the access unit being able to provide wireless communication. The communication between said access unit and an electronic device, such as a laptop, a personal digital assistant or an ordinary computer may be provided by means of cables or wireless communication in the form of e.g. short range radio (e.g. bluetooth) or infrared light. Furthermore, in extreme cases, the communication between said access nit and said electronic device may be provided by means of ultrasonic or hydrophonic communication. The security firmware may also be inserted inside the computer functioning as a remote host, wherein the computer communicates using said security firmware as a security gateway.

The term "comprises/comprising" when used in this specification is taken to specify the presence of stated features, integers, steps or components but does not preclude the presence or addition of one or more other features, integers, steps, components or groups thereof.

Further scope of applicability of the present invention will become apparent from the detailed description given hereinafter. However, it should be understood that the detailed description and specific examples, while indicating preferred embodiments of the invention, are given by way of illustration only, since various changes and modifications within scope of the invention will become apparent to those skilled in the art from this detailed description.

### BRIEF DESCRIPTION OF THE DRAWINGS

- Figure 1: is a picture illustrating the usage of the method and arrangement according to the invention.
- Figure 2: is a diagram illustrating the three layers in the Internet.
- Figure 3: is a flowchart of tunnel record updating wherein a security system according to the invention is used.
- Figure 4: is a diagram illustrating a security system for communication according to the invention.

The invention will now be described in more detail with reference to preferred exemplifying embodiments thereof and with reference to the accompanying drawings.

### DETAILED DESCRIPTION

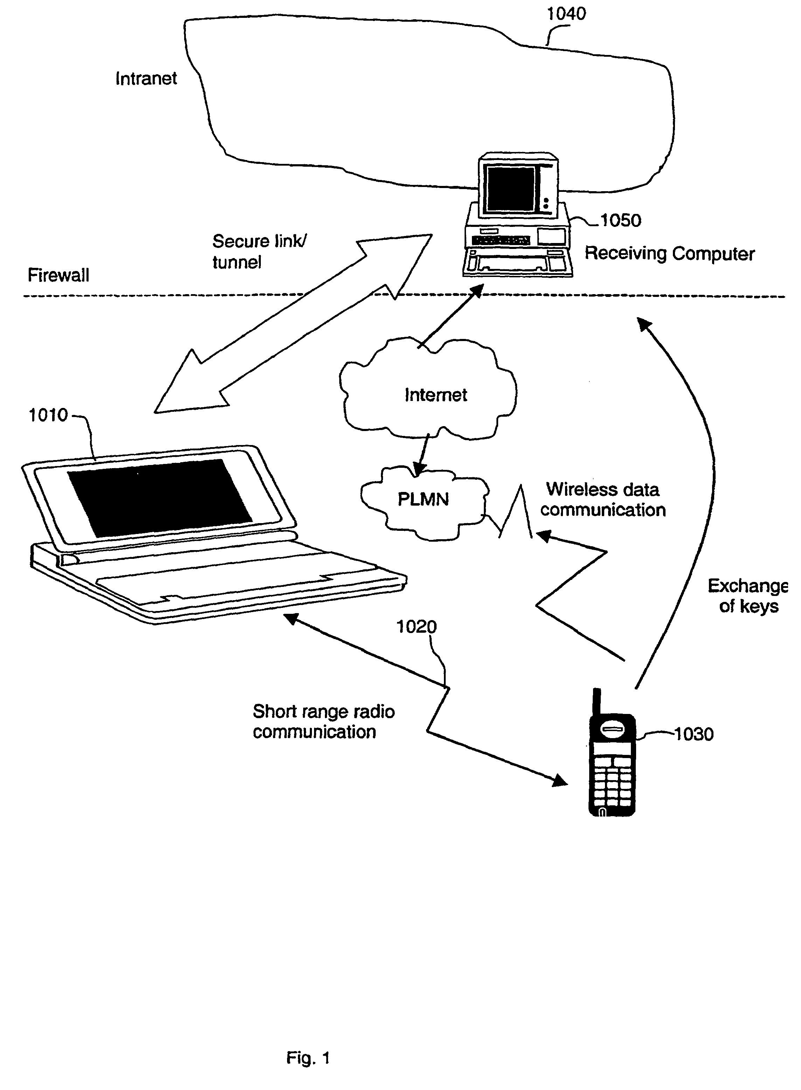

In figure 1 the usage of the method and arrangement according to the invention is illustrated. An employee, Mr. Smith, of an international company, e.g. Ericsson, is visiting Tokyo. Mr. Smith owns a mobile telephone 1030 provided with a SIM card having a security firmware according to the invention. Mr. Smith wants to communicate with Ericsson's Intranet 1040, which is located in Stockholm, Sweden. Mr. Smith borrows a laptop 1010 from the Hotel, where he stays during his visit in Tokyo. He connects the laptop 1010 by means of short range radio communication 1020 to his mobile. In a further application, a cable may be used instead of short-range radio communication. In a yet further embodiment of the invention, the laptop 1010 may be replaced by a stand-alone computer. The communication between the laptop 1010 and the mobile 1030 may be provided by means of infrared light. In a further embodiment, the SIM card provided with the security firmware may be inserted in the lap top 1010. Mr. Smith is now able to communicate by means of wireless communication with Ericsson's Intranet 1040 in Stockholm. The wireless communication between the mobile 1030 and the receiving computer may be provided through the Public Land Mobile Network (PLMN) and the Internet. In a further embodiment, satellite communication is also possible. The mobile 1030 is acting as a security gateway for the communication between the Intranet 1040 and the laptop 1010. The Intranet 1040 is provided with a receiving computer 1050 acting as an Intranet Security Gateway for the communication between the Intranet 1040 and the rest of the world.

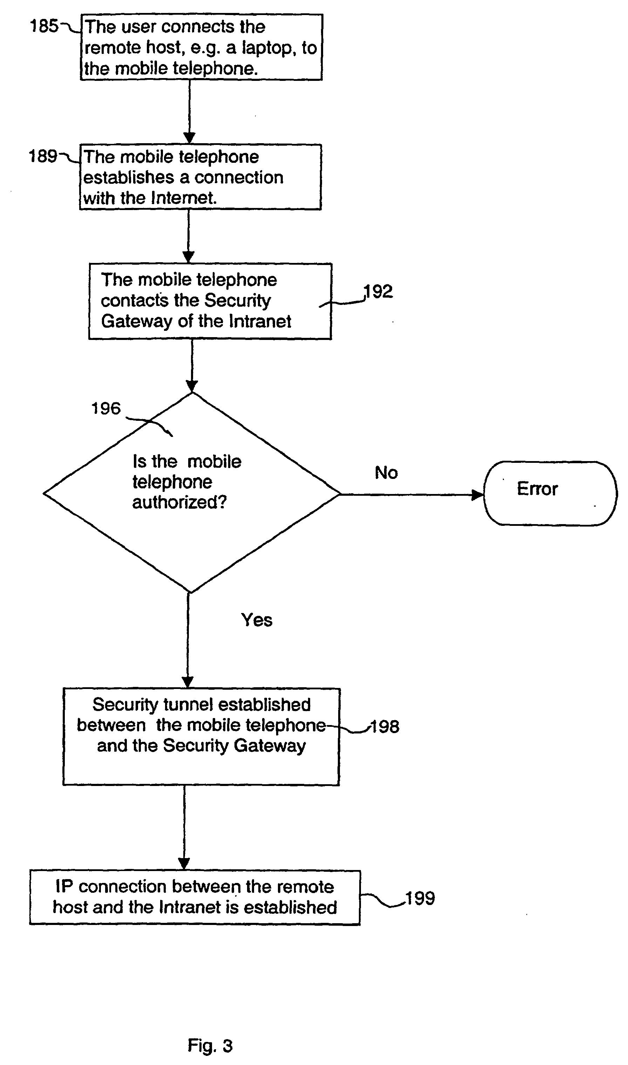

Figure 3 is a flowchart of a method for data protection (security) via encryption/decryption for network communication according to the invention. When a user wants to access his Intranet from a remote host, the user connects his independent access unit, e.g. a mobile telephone, provided with a security firmware according to the invention to a computer (step 185). Thereafter, the mobile telephone establishes a connection with the Internet (step 189). Thereat, the mobile telephone contacts the Security Gateway of the Intranet (step 192). A computer, acting as a gateway to the Intranet and provided with a security gateway, checks if the security gateway in the independent access unit, is authorized (step 196). If this is not the case, an error message is sent to the telephone. Otherwise, a security tunnel is established between the mobile telephone and the security Gateway (step 198). Thereat, an IP connection between the remote host and the Intranet is established.

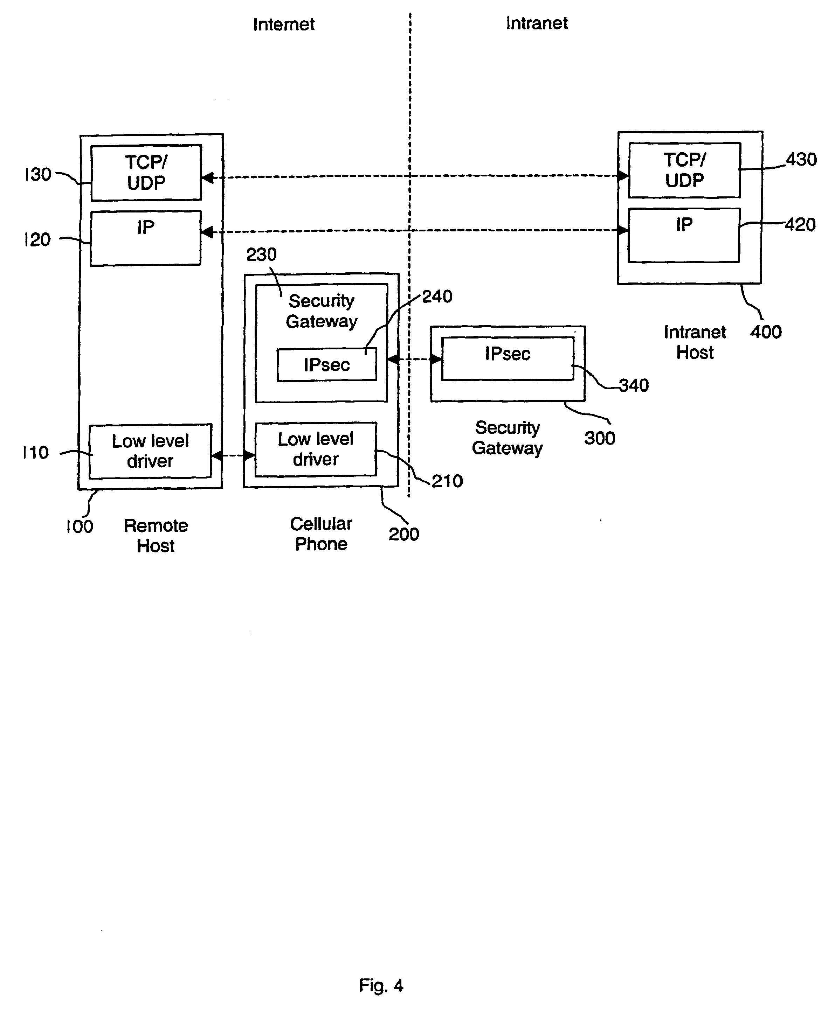

In figure 4 is shown the communication between the entities according to a preferred embodiment. The three levels of communication is illustrated in figure 4. Each protocol communicates with its logical correspondent. The communication is provided layer by layer; the TCP/UDP-layer 130 at the Remote host 100, at the Internet side communicates with the TCP/UDP-layer 430 at the Intranet Host 400, the IP-layer 120 at the Remote host 100 communicates with the IP-layer 420 at the Intranet Host 400, at the Intranet side. As is shown in figure 4, the Remote Host 100 is not provided with a network security layer, i.e. installation of a network security layer at the Remote Host 100 is not required. All security management is provided in the mobile telephone 200. The mobile telephone 200 at the Internet side is provided with a security gateway 230, provided with a firmware called IPsec in 240. The complexity of the security gateway functionality 230 can be held low, as only one single host needs to be protected. The hardware and the software in the mobile telephone 200 can be reliably implemented. On the other hand, the trust one can put on the Remote Host 100 is limited. Communication between the Remote Host 100 and the mobile telephone 200 is secure, for example by serial cable connecting both devices, the built-in security of the communication link (e.g. Bluetooth or some other short range communication), or the short range capability (infrared light). The IPsec firmware 240 and the key management are located inside the mobile telephone 200, as part of the security gateway 230, where it cannot be affected by potential attacks. The IPsec layer 240 in the mobile telephone 200 on the Internet side communicates with the IPsec layer 340 in the Security Gateway 300 on the Intranet side. The Security Gateway 300 terminates the IPsec tunnel and forwards the IP packets from the remote host to the Intranet host. In a preferred embodiment, the Security Gateway 300 is located inside the Intranet Host 400. In a further preferred embodiment, the security gateway 300 is a part of the host 400.

The control of the mobile telephone Security Association (SA), such as keys for VPN establishment and security policies, can be done statically or dynamically.

In the simple case, the SA is loaded into the mobile telephone by out-of-band secure means (i.e. static configuration). This could be done manually for simple configurations, or securely downloaded within the Intranet from an authenticated site. The mobile telephone can also be pre-configured to get its Intranet network parameters within the Intranet. In such a case, manual IPsec would run between the telephone and the security gateway.

Dynamic configuration of the IPsec tunnel and the remote host may also be provided according to the Internet Key Exchange (IKE) [RFC 2409]. In such a case, the IKE protocol is employed to establish an initial security association between the telephone and the security gateway. This tunnel would then be used to negotiate a remote host SA. IKE has been chosen because said dynamic configuration provides a transportable security gateway. Furthermore, a personal security gateway provides better control and supervision.

It should be observed that:
- The pre-configuration of the security associations could be very strong and only allow access to certain gateways or it could be very relaxed and be more or less under user control.
- Implementation of the IKE protocol would allow the usage of Public Key Infrastructure (PKI) based key management.
- Other security channels can be implemented according to this idea. Instead of the IPsec protocol, it is e.g. possible to have transport layer security (TLS: Transport Layer Security/SSL: Secure Socket Layer/SSH: Secure Shell/WTLS: Wireless TLS), simple packet filtering, or link-level encryption for modem connections.

In a yet future embodiment, in a communication system transmitting speech over an IP-channel, the method disclosed herein can be used.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A method for communication of data packets in a communication system comprising a remote host (1010), an independent access unit (1030) authenticating access to a communications network and encrypting information, a receiving computer (1050) acting as a security gateway to an intranet, and forwarding received data packets to an intranet host (400), **characterized by** the steps:
- establishing a first communications path between the remote host (1010) and the independent access unit (1030);
- determining, by use of security firmware and secret key information at the independent access unit (1030), a security association;
- establishing a second communications path according to a security protocol layer between the independent access unit (1030) and the receiving computer (1050) over the communications network and in dependence of the security association.
- establishing a communications path between the remote host (1010) and the intranet host comprising the first and the second communications paths whereby the independent access unit (1030) serves as a gateway between the first and the second communications paths and whereby the receiving computer (1050) serves as a gateway between the second communications path and an intranet path to the intranet host.

2. A method according to claim 1, **characterized in that** the end-to-end protocol layer is TCP/IP and the security protocol layer is IPsec for which support is provided by said firmware.

3. A method according to claim 1, **characterized in that** the firmware is provided in the form of software.

4. A method according to claim 1-3, **characterized in that** said remote host is a laptop or a stand-alone computer.

5. A method according to claim 1-3, **characterized in that** said remote host is a personal digital assistant.

6. A method according to claim 1, **characterized in that** the first communication between the independent access unit (1030) and the remote host (1010) is performed by means of a wireless connection.

7. A method according to claim 1, **characterized in that** the first communication between the independent access unit (1030) and the remote host (1010) is performed by means of short-range radio.

8. A method according to claim 7, **characterized in that** said short-range radio communication is adapted to the Bluetooth standard.

9. A method according to claim 6, **characterized in that** the first communication between the independent access and the remote host is performed by means of infrared light.

10. A method according to claim 1, **characterized in that** client private information required per client authentication are stored in a personal tamperproof storage and used in combination with the independent access unit as a security gateway upon establishment of a IPsec tunnel enabling a user to borrow any remote host in order to access the intranet by means of a mobile communication network or a fixed network.

11. A method according to claim 10, **characterized in that** said tamperproof storage is provided in the form of a SIM-card/smart card.

12. A method according to claim 1, **characterized in that** the security gateway 300 terminates the IPsec secure link and forwards the IP packets from the remote host to the intranet host.

13. A method according to claim 1, **characterized in that** the configuration of the independent access unit Security Association SA is performed statically in a pre-configuration phase.

14. A method according to claim 1, **characterized in that** the configuration of the independent access unit Security Association SA is performed dynamically.

15. A method according to claim 14, **characterized in that** the dynamic configuration is provided by means of Internet Key Exchange (IKE) in order to establish an initial security association between the independent access unit and the security gateway, thereat said secure link is used to negotiate a remote host SA.

16. A method according to claim 13, **characterized in that** the pre-configuration of the security only allows access to certain gateways.

17. A method according to claim 13, **characterized in that** the pre-configuration is under user control.

18. A method according to claim 15, **characterized in that** the PKI based key management is used.

19. A method according to claim 1, **characterized in that in that** said method is used in a communication system transmitting speech over an IP-channel.

20. A computer program product directly loadable into the internal memory of an independent access unit, **characterized by** comprising software portions for performing the method according to any of claims 1-19, when the independent access unit is activated by a computer.

21. An arrangement for communication of data packets in a communication system including a remote host (1010), an independent access unit (1030) to a communications network, a receiving computer (1050) acting as a security Gateway between the at least partly public communications network and an intranet, and an intranet host **characterized by**:
- means for establishing a first communications path between the remote host (1010) and the independent access unit (1030);
- means for determining, by use of security firmware and secret key information at the independent access unit (1030), a security association between the independent access unit (1030) and the receiving computer (1050);
- means for establishing a second communications path according to a security protocol layer between the independent access unit (1030) and the receiving computer (1050) over the communications network and in dependence of the security association.
- means for establishing a communications path according to a end-to-end protocol layer between the remote host (1010) and the intranet host comprising the first and the second communications paths whereby the independent access unit (1030) serves as a gateway between the first and the second communications paths and whereby the receiving computer (1050) serves as a gateway between the second communications path and an intranet path to the intranet host.

22. An arrangement according to claim 21, **characterized in that** the firmware is provided in the form of IPsec.

23. An arrangement according to claim 21, **characterized in that** the firmware is provided in the form of software.

24. An arrangement according to claim 21-23, **characterized in that** said remote host is a laptop or a stand-alone computer.

25. An arrangement according to claim 21-23, **characterized in that** said remote host is a personal digital assistant.

26. An arrangement according to claim 21, **characterized in that** the communication path between the independent access unit (1030) and the remote host (1010) is established by means of a wireless connection.

27. An arrangement according to claim 21, **characterized in that** the communication path between the independent access unit (1030) and the remote host (1010) is established by means of short range radio.

28. An arrangement according to claim 27, **characterized in that** said short-range radio communication is adapted to the Bluetooth standard.

29. An arrangement according to claim 26, **characterized in that** the communication path between the independent access unit (1030) and the remote host (1010) is performed by means of infrared light.

30. An arrangement according to claim 21, **characterized in that** client private information required per client authentication are stored in the personal tamperproof storage and used in combination with the independent access unit as a security gateway upon establishment of a IPsec tunnel enabling a user to borrow any remote host in order to access the intranet by means of a mobile communication network or a fixed network.

31. An arrangement according to claim 30, **characterized in that** said tamperproof storage is provided in the form of a SIM-card/smart card.

32. An arrangement according to claim 21, **characterized in that** the security gateway 300 terminates the IPsec secure link and forwards the IP packets from the remote host to the intranet host.

33. An arrangement according to claim 21, **characterized in that** the control of the independent access unit Security Association SA is performed statically in a pre-configuration phase.

34. An arrangement according to claim 21, **characterized in that** the control of the independent access unit Security Association SA is performed dynamically.

35. An arrangement according to claim 34, **characterized in that** the dynamic configuration is provided by means of Internet Key Exchange (IKE) in order to establish an initial security association between the independent access unit and the security gateway, thereat said secure link is used to negotiate a remote host SA.

36. An arrangement to claim 33, **characterized in that** the pre-configuration of the security only allows access to certain gateways.

37. An arrangement according to claim 33, **characterized in that** the pre-configuration is under user control.

38. An arrangement according to claim 35, **characterized in that** the PKI based key management is used.

## Patentansprüche

1. Ein Verfahren zur Übertragung von Datenpaketen in einem Kommunikationssystem mit einem Fern-Host(1010), einer unabhängigen Zugangseinheit (1030) zum Authentifizieren eines Zugangs zu einem Kommunikationsnetzwerk und Verschlüsseln von Information, einem Empfangscomputer (1050), der als ein Sicherheits-Gateway zu einem Intranet tätig ist und empfangene Datenpakete zu einem Intranet-Host (400) weiterleitet, **gekennzeichnet durch** die folgenden Schritte:
- Aufbauen eines ersten Übertragungspfades zwischen dem Fern-Host (1010) und der unabhängigen Zugangseinheit (1030);
- Bestimmen, **durch** Gebrauch von Sicherheitsfirmware und Geheimschlüsselinformation bei der unabhängigen Zugangseinheit (1030), eines Sicherheitsverbands;
- Aufbauen eines zweiten Übertragungspfades gemäß einer Sicherheitsprotokollschicht zwischen der unabhängigen Zugangseinheit (1030) und dem Empfangscomputer (1050) über das Kommunikationsnetzwerk und in Abhängigkeit von dem Sicherheitsverband.
- Aufbauen eines Übertragungspfades zwischen dem Fern-Host (1010) und dem Intranet-Host mit dem ersten und dem zweiten Übertragungspfad, wobei die unabhängige Zugangseinheit (1030) als ein Gateway zwischen dem ersten und dem zweiten Übertragungspfad dient, und wobei der Empfangscomputer (1050) als ein Gateway zwischen dem zweiten Übertragungspfad und einem Intranetpfad zu dem Intranet-Host dient.

2. Ein Verfahren gemäß Anspruch 1, **dadurch gekennzeichnet, dass** die End-zu-End-Protokollschicht TCP/IP ist und die Sicherheitsprotokollschicht IPsec ist, für die Unterstützung durch die Firmware bereitgestellt wird.

3. Ein Verfahren gemäß Anspruch 1, **dadurch gekennzeichnet, dass** die Firmware in der Form von Software bereitgestellt ist.

4. Ein Verfahren gemäß Anspruch 1 bis 3, **dadurch gekennzeichnet, dass** der Fern-Host ein Laptop oder ein eigenständiger Computer ist.

5. Ein Verfahren gemäß Anspruch 1 bis 3, **dadurch gekennzeichnet, dass** der Fern-Host ein Persönlicher-Digital-Assistent (PDA) ist.

6. Ein Verfahren gemäß Anspruch 1,**dadurch gekennzeichnet, dass** die erste Übertragung zwischen der unabhängigen Zugangseinheit (1030) und dem Fern-Host (1010) mittels einer Funkverbindung durchgeführt wird.

7. Ein Verfahren gemäß Anspruch 1, **dadurch gekennzeichnet, dass** die erste Übertragung zwischen der unabhängigen Zugangseinheit (1030) und dem Fern-Host (1010) mittels Kurzwellenfunk durchgeführt wird.

8. Ein Verfahren gemäß Anspruch 7, **dadurch gekennzeichnet, dass** die Kurzwellenfunkübertragung an den Bluetooth-Standard angepasst ist.

9. Ein Verfahren gemäß Anspruch 6, **dadurch gekennzeichnet, dass** die erste Übertragung zwischen dem unabhängigen Zugang und dem Fern-Host mittels Infrarotlicht durchgeführt wird.

10. Ein Verfahren gemäß Anspruch 1, **dadurch gekennzeichnet, dass** pro Client-Authentifizierung erforderliche Client-Privat-Information in einem persönlichen, gegen Eingriffe gesicherten Speicher gespeichert und in Kombination mit der unabhängigen Zugangseinheit verwendet wird als ein Sicherheits-Gateway bei Einrichtung eines IPsec-Tunnels, der einem Benutzer das Ausborgen irgendeines Fern-Hosts ermöglicht, um auf das Intranet mittels eines Mobilkommunikationsnetzwerkes oder eines festen Netzwerkes zuzugreifen.

11. Ein Verfahren gemäß Anspruch 10, **dadurch gekennzeichnet, dass** der gegen Eingriffe gesicherte Speicher in der Form einer SIM-Karte/Smart-Card bereitgestellt wird.

12. Ein Verfahren gemäß Anspruch 1, **dadurch gekennzeichnet, dass** der Sicherheits-Gateway 300 die IPsec gesicherte Verbindung abbricht und die IP-Pakete von dem Fern-Host zu dem Intranet-Host weiterleitet.

13. Ein Verfahren gemäß Anspruch 1, **dadurch gekennzeichnet, dass** die Konfiguration des Sicherheitsverbands SA der unabhängigen Zugangseinheit statisch in einer Vorkonfigurationsphase durchgeführt wird.

14. Ein Verfahren gemäß Anspruch 1, **dadurch gekennzeichnet, dass** die Konfiguration des Sicherheitsverbands SA der unabhängigen Zugangseinheit dynamisch durchgeführt wird.

15. Ein Verfahren gemäß Anspruch 14, **dadurch gekennzeichnet, dass** die dynamische Konfiguration mittels eines Internetschlüsselaustauschs (IKE) bereitgestellt wird, um einen Anfangssicherheitsverband zwischen der unabhängigen Zugangseinheit und dem Sicherheits-Gateway aufzubauen, wobei die sichere Verbindung zum Aushandeln eines Fern-Host-SA verwendet wird.

16. Ein Verfahren gemäß Anspruch 13, **dadurch gekennzeichnet, dass** die Vorkonfiguration der Sicherheit nur Zugang zu gewissen Gateways erlaubt.

17. Ein Verfahren gemäß Anspruch 13, **dadurch gekennzeichnet, dass** die Vorkonfiguration unter Benutzersteuerung erfolgt.

18. Ein Verfahren gemäß Anspruch 15, **dadurch gekennzeichnet, dass** die PKI-basierte Schlüsselverwaltung verwendet wird.

19. Ein Verfahren gemäß Anspruch 1, **dadurch gekennzeichnet, dass** in diesem das Verfahren in einem über einen IP-Kanal Sprache übertragenden Kommunikationssystem verwendet wird.

20. Ein direkt in den internen Speicher einer unabhängigen Zugangseinheit ladbares Computerprogrammprodukt, **gekennzeichnet durch** Umfassen von Softwareteilen zum Durchführen des Verfahrens gemäß irgendeinen der Ansprüche 1 bis 19, wenn die unabhängige Zugangseinheit **durch** einen Computer aktiviert wird.

21. Eine Vorrichtung zur Übertragung von Datenpaketen in einem Kommunikationssystem mit einem Fern-Host (1010), einer unabhängigen Zugangseinheit (1030) zu einem Kommunikationsnetzwerk, einem Empfangscomputer (1050), der als ein Sicherheits-Gateway zwischen dem mindestens teilweise öffentlichen Kommunikationsnetzwerk und einem Intranet tätig ist, und einem Intranet-Host, **gekennzeichnet durch**:
- Mittel zum Aufbauen eines ersten Übertragungspfades zwischen dem Fern-Host (1010) und der unabhängigen Zugangseinheit (1030);
- Mittel zum Bestimmen, **durch** Gebrauch von Sicherheitsfirmware und Geheimschlüsselinformation bei der unabhängigen Zugangseinheit (1030), eines Sicherheitsverbands zwischen der unabhängigen Zugangseinheit (1030) und dem Empfangscomputer (1050);
- Mittel zum Aufbauen eines zweiten Übertragungspfades gemäß einer Sicherheitsprotokollschicht zwischen der unabhängigen Zugangseinheit (1030) und dem Empfangscomputer (1050) über das Kommunikationsnetzwerk und in Abhängigkeit des Sicherheitsverbands;
- Mittel zum Aufbauen eines Kommunikationspfades gemäß einer End-zu-End-Protokollschicht zwischen dem Fern-Host (1010) und dem Intranet-Host, die den ersten und den zweiten Übertragungspfad umfassen, wobei die unabhängige Zugangseinheit (1030) als ein Gateway zwischen dem ersten und dem zweiten Übertragungspfad dient, und wobei der Empfangscomputer (1050) als ein Gateway zwischen dem zweiten Übertragungspfad und einem Intranetpfad zu dem Intranet-Host dient.

22. Eine Vorrichtung gemäß Anspruch 21, **dadurch gekennzeichnet, dass** die Firmware in der Form von IPsec bereitgestellt ist.

23. Eine Vorrichtung gemäß Anspruch 21, **dadurch gekennzeichnet, dass** die Firmware in der Form von Software bereitgestellt ist.

24. Eine Vorrichtung gemäß Anspruch 21 bis 23, **dadurch gekennzeichnet, dass** der Fern-Host ein Laptop oder ein eigenständiger Computer ist.

25. Eine Vorrichtung gemäß Anspruch 21 bis 23, **dadurch gekennzeichnet, dass** der Fern-Host ein Persönlicher-Digital-Assistent (PDA) ist.

26. Eine Vorrichtung gemäß Anspruch 21, **dadurch gekennzeichnet, dass** der Übertragungspfad zwischen der unabhängigen Zugangseinheit (1030) und dem Fern-Host (1010) mittels einer Funkverbindung aufgebaut ist.

27. Eine Vorrichtung gemäß Anspruch 21, **dadurch gekennzeichnet, dass** der Übertragungspfad zwischen der unabhängigen Zugangseinheit (1030) und dem Fern-Host (1010) mittels Kurzwellenfunk aufgebaut ist.

28. Eine Vorrichtung gemäß Anspruch 27, **dadurch gekennzeichnet, dass** die Kurzwellenfunkverbindung angepasst ist an den Bluetooth-Standard.

29. Eine Vorrichtung gemäß Anspruch 26, **dadurch gekennzeichnet, dass** der Übertragungspfad zwischen der unabhängigen Zugangseinheit (1030) und dem Fern-Host (1010) mittels Infrarotlicht durchgeführt ist.

30. Eine Vorrichtung gemäß Anspruch 21, **dadurch gekennzeichnet, dass** pro Client-Authentifizierung erforderliche Client-Privat-Information in dem persönlichen, gegen Eingriffe gesicherten Speicher gespeichert und in Kombination mit der unabhängigen Zugangseinheit verwendet wird als ein Sicherheits-Gateway bei Einrichtung eines IPsec-Tunnels, der einem Benutzer das Ausborgen irgendeines Fern-Hosts ermöglicht, um auf das Intranet mittels eines Mobilkommunikationsnetzwerks oder eines festen Netzwerkes zuzugreifen.

31. Eine Vorrichtung gemäß Anspruch 30, **dadurch gekennzeichnet, dass** der gegen Eingriffe gesicherte Speicher in der Form einer SIM-Karte/Smart-Card bereitgestellt ist.

32. Eine Vorrichtung gemäß Anspruch 21, **dadurch gekennzeichnet, dass** der Sicherheits-Gateway 300 die Ipsec gesicherte Verbindung abbricht und die IP-Pakete von dem Fern-Host zu dem Intranet-Host weiterleitet.

33. Eine Vorrichtung gemäß Anspruch 21, **dadurch gekennzeichnet, dass** die Steuerung des Sicherheitsverbands SA der unabhängigen Zugangseinheit statisch in einer Vorkonfigurationsphase durchgeführt ist.

34. Eine Vorrichtung gemäß Anspruch 21, **dadurch gekennzeichnet, dass** die Steuerung des Sicherheitsverbands SA der unabhängigen Zugangseinheit dynamisch durchgeführt ist.

35. Eine Vorrichtung gemäß Anspruch 34, **dadurch gekennzeichnet, dass** die dynamische Konfiguration mittels eines Internetschlüsselaustauschs (IKE) bereitgestellt ist, um einen Anfangssicherheitsverband zwischen der unabhängigen Zugangseinheit und dem Sicherheits-Gateway aufzubauen, wobei die sichere Verbindung zum Aushandeln eines Fern-Host-SA verwendet wird.

36. Eine Vorrichtung gemäß Anspruch 33, **dadurch gekennzeichnet, dass** die Vor konfiguration der Sicherheit nur den Zugriff auf gewisse Gateways erlaubt.

37. Eine Vorrichtung gemäß Anspruch 33, **dadurch gekennzeichnet, dass** die Vorkonfiguration unter Benutzersteuerung erfolgt.

38. Eine Vorrichtung gemäß Anspruch 35, **dadurch gekennzeichnet, dass** die PKI-basierte Schlüsselverwaltung verwendet wird.

## Revendications

1. Procédé de communication de paquets de données dans un système de communication comprenant un ordinateur hôte distant (1010), une unité indépendante d'accès (1030) authentifiant l'accès à un réseau de communication et chiffrant les informations, un ordinateur récepteur (1050) jouant le rôle de passerelle de sécurité vers un réseau intranet et transmettant des paquets de données reçues à un ordinateur hôte sur l'intranet (400), **caractérisé par** les étapes consistant à :
- établir un premier trajet de communication entre l'ordinateur hôte distant (1010) et l'unité indépendante d'accès (1030) ;
- déterminer, en utilisant un micrologiciel de sécurité et des informations de clef secrète au niveau de l'unité indépendante d'accès (1030), une association de sécurité ;
- établir un second trajet de communication, selon une couche de protocole de sécurité, entre l'unité indépendante d'accès (1030) et l'ordinateur récepteur (1050) sur le réseau de communication et en fonction de l'association de sécurité ;
- établir un trajet de communication entre l'ordinateur hôte distant (1010) et l'ordinateur hôte sur l'intranet, comprenant les premier et second trajets de communication, grâce à quoi l'unité indépendante d'accès (1030) sert de passerelle entre le premier et le second trajet de communication, et l'ordinateur récepteur (1050) sert de passerelle entre le second trajet de communication et un trajet intranet menant à l'ordinateur hôte sur l'intranet.

2. Procédé selon la revendication 1, **caractérisé en ce que** la couche de protocole de bout en bout est le TCP/IP et la couche de protocole de sécurité est IPsec, dont le support est fourni par ledit micrologiciel.

3. Procédé selon la revendication 1, **caractérisé en ce que** le micrologiciel est fourni sous la forme de logiciel.

4. Procédé selon les revendications 1 à 3, **caractérisé en ce que** ledit ordinateur hôte distant est un ordinateur portable ou un ordinateur autonome.

5. Procédé selon les revendications 1 à 3, **caractérisé en ce que** ledit ordinateur hôte distant est un assistant numérique personnel.

6. Procédé selon la revendication 1, **caractérisé en ce que** la première communication entre l'unité indépendante d'accès (1030) et l'ordinateur hôte distant (1010) est réalisée au moyen d'une connexion sans fil.

7. Procédé selon la revendication 1, **caractérisé en ce que** la première communication entre l'unité indépendante d'accès (1030) et l'ordinateur hôte distant (1010) est réalisée au moyen d'une communication radio à faible portée.

8. Procédé selon la revendication 7, **caractérisé en ce que** ladite communication radio à faible portée est adaptée à la norme Bluetooth.

9. Procédé selon la revendication 6, **caractérisé en ce que** la première communication entre l'unité indépendante d'accès et l'ordinateur hôte distant est réalisée au moyen de lumière infrarouge.

10. Procédé selon la revendication 1, **caractérisé en ce que** les informations privées du client exigées pour l'authentification du client sont stockées dans une mémoire personnelle protégée contre les manipulations et sont utilisées en combinaison avec l'unité indépendante d'accès jouant le rôle de passerelle de sécurité après établissement d'un tunnel IPsec permettant à un utilisateur d'emprunter n'importe quel ordinateur hôte distant pour accéder à l'intranet au moyen d'un réseau de communication mobile ou d'un réseau fixe.

11. Procédé selon la revendication 10, **caractérisé en ce que** ladite mémoire protégée contre les manipulations est fournie sous la forme d'une carte SIM/carte à puce.

12. Procédé selon la revendication 1, **caractérisé en ce que** la passerelle de sécurité 300 constitue la terminaison de la liaison Ipsec sécurisée et transfère les paquets IP entre l'ordinateur hôte distant et l'ordinateur hôte sur l'intranet.

13. Procédé selon la revendication 1, **caractérisé en ce que** la configuration de l'association de sécurité SA (pour « Security Association ») de l'unité indépendante d'accès est réalisée statiquement au cours d'une phase de préconfiguration.

14. Procédé selon la revendication 1, **caractérisé en ce que** la configuration de l'association de sécurité SA de l'unité indépendante d'accès est réalisée dynamiquement.

15. Procédé selon la revendication 14, **caractérisé en ce que** la configuration dynamique est fournie au moyen d'un échange de clefs sur internet (IKE, pour « Internet Key Exchange »), afin d'établir une association de sécurité initiale entre l'unité indépendante d'accès et la passerelle de sécurité, après quoi ladite liaison sécurisée est utilisée pour négocier une association de sécurité pour l'ordinateur hôte distant.

16. Procédé selon la revendication 13, **caractérisé en ce que** la préconfiguration de la sécurité ne permet l'accès qu'à certaines passerelles.

17. Procédé selon la revendication 13, **caractérisé en ce que** la préconfiguration est commandée par l'utilisateur.

18. Procédé selon la revendication 15, **caractérisé en ce que** l'on utilise la gestion de clefs basée sur la PKI.

19. Procédé selon la revendication 1, **caractérisé en ce que** ledit procédé est utilisé dans un système de communication transmettant de la parole sur un canal IP.

20. Produit logiciel d'ordinateur pouvant être directement chargé dans la mémoire interne d'une unité indépendante d'accès, **caractérisé en ce qu'**il comprend des portions de logiciel pour exécuter le procédé selon l'une quelconque des revendications 1 à 19 lorsque l'unité indépendante d'accès est activée par un ordinateur.

21. Agencement pour la communication de paquets de données dans un système de communication comprenant un ordinateur hôte distant (1010), une unité indépendante d'accès (1030) à un réseau de communication, un ordinateur récepteur (1050), jouant le rôle de passerelle de sécurité entre le réseau de communication au moins partiellement public et un réseau intranet, et un ordinateur hôte sur l'intranet, **caractérisé par** :
- un moyen pour établir un premier trajet de communication entre l'ordinateur hôte distant (1010) et l'unité indépendante d'accès (1030) ;
- un moyen pour déterminer, en utilisant un micrologiciel de sécurité et des informations de clef secrète sur l'unité indépendante d'accès (1030), une association de sécurité entre l'unité indépendante d'accès (1030) et l'ordinateur récepteur (1050) ;
- un moyen pour établir un second trajet de communication, selon une couche de protocole de sécurité, entre l'unité indépendante d'accès (1030) et l'ordinateur récepteur (1050) sur le réseau de communication et en fonction de l'association de sécurité ;
- un moyen pour établir un trajet de communication selon une couche de protocole de bout en bout, entre l'ordinateur hôte distant (1010) et l'ordinateur hôte sur l'intranet, comprenant les premier et second trajets de communication, grâce à quoi l'unité indépendante d'accès (1030) sert de passerelle entre le premier et le second trajet de communication, et l'ordinateur récepteur (1050) sert de passerelle entre le second trajet de communication et un trajet intranet menant à l'ordinateur hôte sur l'intranet.

22. Agencement selon la revendication 21, **caractérisé en ce que** le micrologiciel est fourni sous la forme d'IPsec.

23. Agencement selon la revendication 21, **caractérisé en ce que** le micrologiciel est fourni sous la forme de logiciel.

24. Agencement selon les revendications 21 à 23, **caractérisé en ce que** ledit ordinateur hôte distant est un ordinateur portable ou un ordinateur autonome.

25. Agencement selon les revendications 21 à 23, **caractérisé en ce que** ledit ordinateur hôte distant est un assistant numérique personnel.

26. Agencement selon la revendication 21, **caractérisé en ce que** le trajet de communication entre l'unité indépendante d'accès (1030) et l'ordinateur hôte distant (1010) est réalisé au moyen d'une connexion sans fil.

27. Agencement selon la revendication 21, **caractérisé en ce que** le trajet de communication entre l'unité indépendante d'accès (1030) et l'ordinateur hôte distant (1010) est réalisé au moyen d'une communication radio à faible portée.

28. Agencement selon la revendication 27, **caractérisé en ce que** ladite communication radio à faible portée est adaptée à la norme Bluetooth.

29. Agencement selon la revendication 26, **caractérisé en ce que** le trajet de communication entre l'unité indépendante d'accès (1030) et l'ordinateur hôte distant (1010) est réalisé au moyen de lumière infrarouge.

30. Agencement selon la revendication 21, **caractérisé en ce que** les informations privées du client exigées pour l'authentification du client sont stockées dans une mémoire personnelle protégée contre les manipulations et sont utilisées en combinaison avec l'unité indépendante d'accès jouant le rôle de passerelle de sécurité après établissement d'un tunnel IPsec permettant à un utilisateur d'emprunter n'importe quel ordinateur hôte distant pour accéder à l'intranet au moyen d'un réseau de communication mobile ou d'un réseau fixe.

31. Agencement selon la revendication 30, **caractérisé en ce que** ladite mémoire protégée contre les manipulations est fournie sous la forme d'une carte SIM/carte à puce.

32. Agencement selon la revendication 21, **caractérisé en ce que** la passerelle de sécurité 300 constitue la terminaison de la liaison IPsec sécurisée et transfère les paquets IP entre l'ordinateur hôte distant et l'ordinateur hôte sur l'intranet.

33. Agencement selon la revendication 21, **caractérisé en ce que** la commande de l'association de sécurité SA de l'unité indépendante d'accès est réalisée statiquement au cours d'une phase de préconfiguration.

34. Agencement selon la revendication 21, **caractérisé en ce que** la commande de l'association de sécurité SA de l'unité indépendante d'accès est réalisée dynamiquement.

35. Agencement selon la revendication 34, **caractérisé en ce que** la configuration dynamique est fournie au moyen d'un échange de clefs sur internet (IKE), afin d'établir une association de sécurité initiale entre l'unité indépendante d'accès et la passerelle de sécurité, après quoi ladite liaison sécurisée est utilisée pour négocier une association de sécurité pour l'ordinateur hôte distant.

36. Agencement selon la revendication 33, **caractérisé en ce que** la préconfiguration de la sécurité ne permet l'accès qu'à certaines passerelles.

37. Agencement selon la revendication 33, **caractérisé en ce que** la préconfiguration est commandée par l'utilisateur.

38. Agencement selon la revendication 35, **caractérisé en ce que** l'on utilise la gestion de clefs basée sur la PKI.
